# EUROPEAN PATENT APPLICATION

(11) **EP 2 000 725 A2**
(43) Date of publication of application: **10.12.2008**
(21) Application number: 08425326.9
(22) Date of filing: 09.05.2008
(51) Int. Cl.: F16L 19/065

(54) **Tube connector**

(30) Priority: 07.06.2007 IT BS20070077
(71) Applicant: Unidelta SPA, I-25078 Vestone (BS) (IT)
(72) Inventor: Freddi, Maurilio , c/o Unidelta S.p.A., 25078 Vestone (Brescia) (IT)
(74) Representative: Sangiacomo, Fulvia

(57) **Abstract**

The invention concerns a tube connector comprising: a one- or multi-way connection body (11) with at least a hole for receiving an end of the tube (16) that has to be connected with the interposition of a toric seal (13), a blocking ring nut (12) that is screwed onto said body; a guide sleeve (14) that places itself between the connection body and the blocking ring nut in order to set the position of the seal (13) around the tube and inside said hole (18) of the connection body; a frustum-conic hooking ring (15) that can buckle in radial manner and that squeezes around the tube in order to block it as a reaction to the screwing of the blocking ring-nut (12) onto the connection body. The frustum-conic hooking ring (15) has a set of tabs (28) which are designed to enter smoothly into radial recesses (29) made on the guide sleeve (14) when the seal is correctly settled inside the connection body and the blocking ring-nut is deeply screwed on the connection body.

## Description

### Field of the invention

This invention concerns in general the field of the tube connectors intended for fluid transport, and refers in particular to a one-, two- or multi-way connector, at least partly of plastic material and using as fluid sealing a ring washer placed around the tube that has to be connected.

### Prior art

In the considered field, several kinds of tube connectors are known, which can be made besides of metal, entirely or partly of plastic material. As a matter of fact from the prior art, among others, tube connectors are known which comprises a connection body with at least a hole intended for receiving an end of the tube that has to be connected with the interposition of a seal, a blocking ring nut that is screwed onto the connection body coaxially with the hole for the tube end reception, and between said body and said blocking ring nut, a sleeve surrounding the tube and intended for positioning the seal and a hooking ring that can buckle in radial manner to squeeze around and block the tube as a reaction to the ring-nut screwing around the connection body.

Such a connector is known, for instance, from the EP-1108176 which was conceived and made out to use, as means for fluid seal between the connection body and the tube that has to be connected, a seal that can buckle through an axial compression for its radial expansion.

### Objects and summary of the invention

An object of this invention is to provide a tube connector arranged to use as medium for seal around the tube, between this one and the connection body, a toric seal (that is an O-ring) that for its correct working requires only its positioning and stop in longitudinal direction on the tube, without the necessity either of compression or of any other buckling.

Another object of the invention is to provide a tube connector that is easy to make, handy to use and where the seal positioning is carried out first and only successively the circumferential blocking on the tube through the closing ring is carried out.

Said objects are achieved by means of a tube connector in accordance with claim 1 and with the advantages of simplifying and facilitating the connection operation between the connector and the tube that has to be connected, of carrying out a correct seal attitude without any incorrect compressions or buckling and of assuring this way fluid seal in the coupling ambit.

### Brief description of the drawings

The invention will be moreover illustrated more in detail in the description course, done with reference to the enclosed exemplifying drawings, where:
Fig. 1 shows in an exploded view the connector components according to the invention;
Fig. 2 shows, in longitudinal section, the connector in a first assembly phase for a tube connection; and
Fig. from 3 to 8 show, in sequence, other assembly phases up to the completion with the tube connection.

### Detailed description of the invention

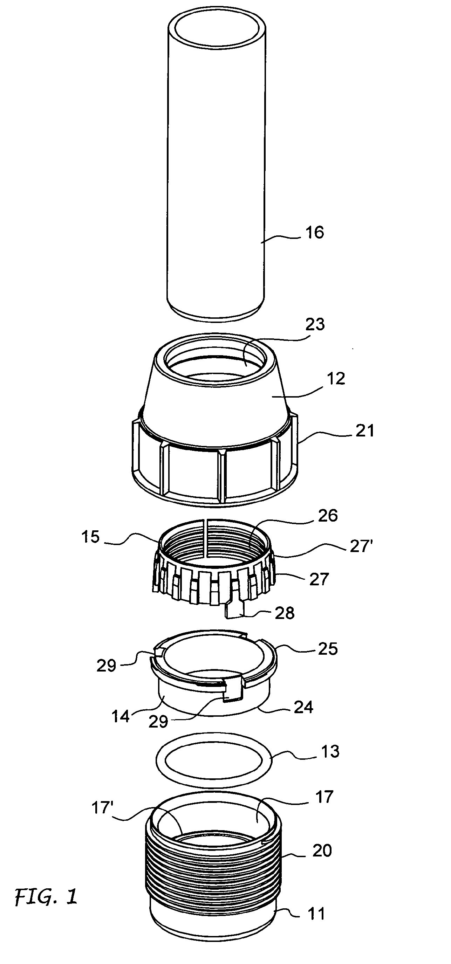

As represented, the connector comprises essentially - Fig. 1 - a connection body 11, a blocking ring nut 12, a toric seal 13, a guide sleeve 14, a hooking ring 15.

Among these components, the toric seal 13, commonly said O-ring, is made in an usual elastomeric material, while the others can be completely of plastic material or partly or entirely of metal as well. The connector is used for connecting tubes 16 that can be entirely of plastic material, entirely of metal or also of the multilayer type, that is with a metal layer between two, inner and outer, plastic layers.

The connection body 11 presents (for each one of its ways) an axial hole with a countersunk entrance and that defines, starting from this, a first seat 17 up to a middle shoulder plane 17', and a second seat 18 up to a bottom shoulder 18'. Said first seat 17 is designed for receiving the seal 13 and the guide sleeve 14, while the second seat 18 is provided for receiving an end of the tube 16 that has to be connected. The connection body 11 has externally a threaded part 20, and although not represented, also means for the catching by a tool.

The blocking ring nut 12 is such to surround the tube 16 that has to be connected and presents externally hold means 21 or a polygonal shape to facilitate its catching through its rotation.

The blocking ring nut 12 has internally a threaded area 22 designed for being screwed around the external threaded part 20 of the connection body 11 followed by a frustum-conic seat 23 whose inner surface is determined by a succession of frustum-conic tracts 23', for instance two or three ones, having a fundamentally equal inclination but a diameter, and therefore an inner section, that are decreasing starting from the inner threaded area 22 of the ring nut.

The toric seal 13 is meant for its placing around the end of the tube 16 that has to be connected.

The guide sleeve 14 is substantially cylindrical and measured to surround the tube 16 that has to be connected. More precisely, said sleeve 14 has an inside diameter compatible with the outside diameter of the tube 20 that has to be connected and an outside diameter compatible with the inside diameter of the first seat 17 in the connection body 11 and intended for receiving the seal 13. The sleeve 14 has a first end 24 directed towards the seal 13 around the tube 16 and an opposite end provided with a annular flange 25 protruding from its periphery.

The hooking ring 15 is substantially frustum-conic, sized to be placed and tightened around the tube 13 that has to be connected, and aligned with the guide sleeve 14. Said ring 15 has a longitudinal cut to enable its contraction, starting from a normal relaxed position, by applying a radial compression force. Internally, it has a fundamentally cylindrical surface fitted with a set of hooking teeth 26 designed to engage the outer surface of tube 16 when the ring is contracted. Externally, it has an inclined surface starting from its end directed towards the guide sleeve 14, which surface, likewise the surface of the frustum-conic seat inside the blocking ring nut 12, is delimited by a succession of frustum-conic portions 27, 27', for instance two or three ones, whose inclinations are substantially the same, but whose diameter and therefore outer section are decreasing towards the opposite end of the hooking ring.

Furthermore, said hooking ring 15 is provided with a set of tabs 28, for instance three ones, protruding frontally, in longitudinal direction, from its end directed towards the guide sleeve 14, which tabs entering with possibility of sliding, into radial recesses 29 made on the adjacent side of said sleeve fitted out with outer annular flange. Tabs 28 of the hooking ring 15 and recesses 29 of the guide sleeve 14 in combination have essentially the following functions:
centring the hooking ring with regard to the guide sleeve,
restraining the rotation of one of these elements in regard to the others, and
allowing a joined sliding of the hooking ring with the guide sleeve onto the tube that has to be connected for the correct positioning of the seal around the tube and inside the connector, and
allowing the closing of the hooking ring around the tube only after the seal positioning along the tube, in the first seat, against the middle beating plane and when the blocking ring nut is situated in the final tract of its screwing around the connection body.

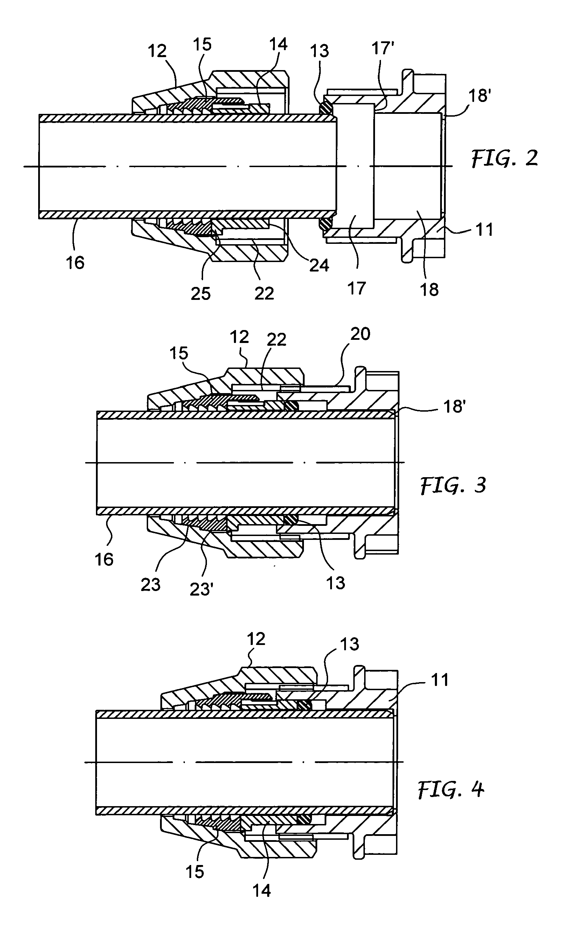

The above-described connector is used by slipping firstly onto the tube 16 that has to be connected, the ring nut 12, the hooking ring 15, the guide sleeve 14 and the seal 13 in this order and so that the seal is close to the end of said tube as shown in Fig. 2.

Afterwards the tube end is slipped into the connection body 11 till it settles down in the second seat 18 in said body and leans against the bottom shoulder 18' as shown in Fig. 3. Then the seal 13 and the guide sleeve 14 will find themselves at least partially fitting into the first seat 17 in the connection body 11.

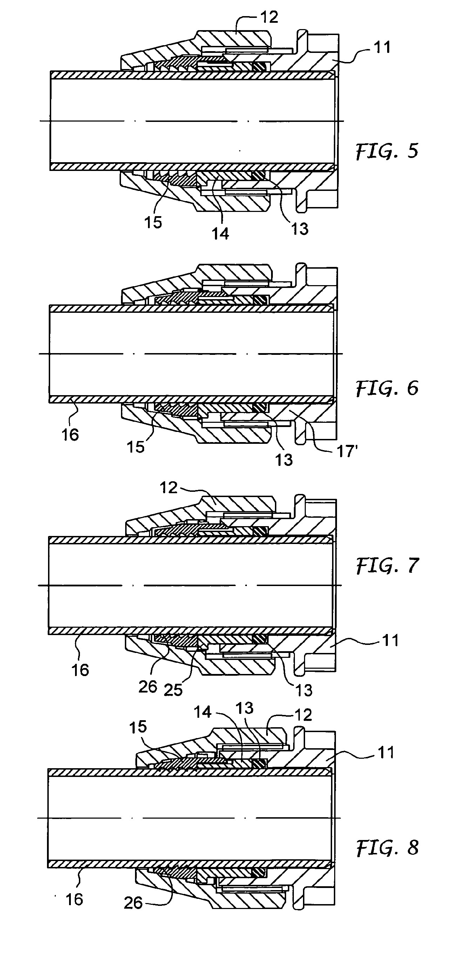

At this point, and as shown in Fig. 4 and 5, the blocking ring nut 12 is screwed onto the connection body 11. With that, the guide sleeve 14 and the seal 13 with it are shifted along the tube and pushed progressively towards the interior of the first seat 17 through the hooking ring 15, yet without the latter interfering with the outer surface of the tube. In fact, the hooking ring 15 is conjugated then with the frustum-conic seat 23 inside the blocking ring nut 12, nevertheless and still remaining in the expanded state, that is without being clenched around the tube.

After a definite screwing of the blocking ring nut onto the connection body, the seal is positioned leaning on the middle beating plane 17' while the ring flange 25 of the guide sleeve 14 leans on the connection body entrance, prevented from moving forward further on in order to avoid a useless and unsuitable seal compression - Fig. 6.

At this point, a conclusive and deep screwing of the blocking ring nut 12 produces a radial compression of the hooking ring 15 which will then engage through the respective hooking teeth 26 the tube outer surface as shown in Fig. 7 and 8, locking it to the connection body with no more possibility either of rotating or of axial slipping off.

## Claims

1. Tube connector of plastic material, metal or multilayer material, comprising:
a connection body (11) with at least an axial hole (17, 18) designed for receiving an end of a tube (16) that has to be connected with the interposition of a toric seal (13),
a blocking ring nut (12) that is screwed onto said connection body coaxially with the axial hole for the end of the tube that has to be connected,
a guide sleeve (14) placed internally between the connection body and the blocking ring nut, surrounding said tube and intended for positioning the seal (13) around the tube and into said hole (18) of said connection body,
a frustum-conic hooking ring (15) that can buckle in radial manner to squeeze around and block the tube that has to be connected as a reaction to the screwing of the blocking ring-nut (12) onto the connection body,
**characterized in that**
said frustum-conic hooking ring (15) is provided with a set of tabs (28), which protrude frontally in longitudinal direction towards the guide sleeve (14) and are designed to enter smoothly into corresponding radial recesses (29) made on an adjacent part of said guide sleeve when the seal is correctly settled inside the connection body and the blocking ring-nut is deeply screwed on the connection body.

2. Tube connector according to claim 1, wherein the connection body (11) is one- or multi-way and presents, for each of its ways, a hole with a countersunk entrance and which determines, starting from said entrance, a first seat (17) intended for receiving the seal (13) and the guide sleeve (14) and a second seat (18) intended for receiving the end of the tube (16) that has to be connected.

3. Tube connector according to claim 2, wherein said first seat (17) is delimited with respect to the second seat (18) by a middle shoulder plane (17') which defines the working position of the seal (13), and said second seat (18) is delimited by a bottom shoulder (18') intended for limiting the tube slipping into the connection body.

4. Tube connector according to preceding claims, wherein the connection body has a threaded outer portion and the blocking ring-nut (12) has internally a threaded area destined to conjugate with said threaded outer portion of the connection body, and a frustum-conic seat (23) with an inner surface intended for interacting with the frustum-conic hooking ring (15) only after the seal is settled inside the connection body through the guide sleeve and said ring-nut is at least near to its complete screwing onto said connection body.

5. Tube connector according to claim 4, wherein the inner surface of the frustum-conic seat (23) inside the blocking ring-nut (12) and the outer surface of the frustum-conic hooking ring (15) are both determined by a succession of frustum-conic tracts (23'; 27, 27'), having a suibstantially equal inclination, but a decreasing diameter starting from the inner threaded area of said ring nut.

6. Tube connector according to claim 5, wherein the hooking ring (15) has a longitudinal cut for its contraction as a reaction to a radial compression force by the blocking ring-nut (12), and, internally, a substantially cylindrical surface with a set of teeth engaging the outer surface of tube when said hooking ring is contracted.

7. Tube connector according to anyone of the preceding claims, wherein the guide sleeve (14) has a head annular flange (25) that leans on the hooking ring (15) and in which the radial recesses (29) interacting with tabs (28) of said hooking ring extend through said top flange.

8. Tube connector according to anyone of the preceding claims, wherein the connection body, the blocking ring-nut, the guide sleeve and the hooking ring can be all or selectively of plastic material or partly or entirely of metal.
